# EUROPEAN PATENT APPLICATION

(11) **EP 3 251 883 A1**
(43) Date of publication of application: **06.12.2017**
(21) Application number: 16172603.9
(22) Date of filing: 02.06.2016
(51) Int. Cl.: B60L 1/00, B60L 11/18, H01M 8/04089, H01M 8/04119

(54) **VEHICLE POWERED WITH A MOTOR AND A FUEL CELL SUPPLY DEVICE**

(71) Applicant: Tinkerbell ApS, 1165 København K (DK)
(72) Inventor: DRAGSTED, Helle Rude, 1550 København V (DK)
(74) Representative: Hoffmann Dragsted A/S

(57) **Abstract**

The present invention relates to a vehicle for performing a self-propelling operation, comprising a power consuming device configured to operate the vehicle or part thereof, a power supply device for supplying power to the power consuming device comprising a fuel cell producing electricity and water and having a fuel inlet, an oxidising inlet, an electric output and a water outlet, a fuel container fluidly connected to the fuel inlet, an oxidising agent container fluidly connected to the oxidising inlet, and a water collecting container fluidly connected to the water outlet, wherein the power supply device further comprises a capillarity member fluidly connecting the water collecting container to the water outlet.

## Description

### Field of the invention

The present invention relates to a vehicle for performing a self-propelling operation.

### Background art

When stuck in a car queue for a long period of time, it is usually undesirable to turn off the heat in the winter or turn off the air-conditioning in the summer. That will, however, often be necessary in order not to run out of fuel, or electricity if driving an electric car. Therefore it is desirable to have an alternative or secondary power supply which does not consume all the primary fuel or electricity.

### Summary of the invention

It is an object of the present invention to wholly or partly overcome the above disadvantages and drawbacks of the prior art. More specifically, it is an object to provide an improved vehicle having a power supply for supplying power to a power consuming device for use e.g. when stuck for a long period of time in a car queue.

The above objects, together with numerous other objects, advantages and features, which will become evident from the below description, are accomplished by a solution in accordance with the present invention by a vehicle for performing a self-propelling operation, comprising:
- a power consuming device configured to operate the vehicle or part thereof, and
- a power supply device for supplying power to the power consuming device comprising:
   - a fuel cell producing electricity and water and having a fuel inlet, an oxidising inlet, an electric output and a water outlet,
   - a fuel container fluidly connected to the fuel inlet,
   - an oxidising agent container fluidly connected to the oxidising inlet, and
   - a water collecting container fluidly connected to the water outlet,
   wherein the power supply device further comprises a capillarity member fluidly connecting the water collecting container to the water outlet.

The water collecting container may comprise a water absorbing material.

Moreover, water absorbing material may comprise Silicon dioxide or similar materials.

Also, the capillarity member may comprise a wick.

Further, the power supply device may have a device housing comprising the fuel cell, the fuel container and the oxidising agent container.

In addition, the water collecting container may be arranged in the device housing.

Moreover, the vehicle may be a remote operated vehicle (ROV), a car, a truck, a bus, or a railed vehicle, such as a train or a tram.

The fuel cell may have an internal pressure which is at least 1.05 bar for increasing a boiling temperature of the water produced in the fuel cell.

Furthermore, the device housing may have an internal pressure of at least 1.05 bar.

The vehicle as described above may further comprise a control unit for controlling the supply of fuel and/or oxidising agent to the fuel cell.

Also, the vehicle as described above may further comprise a regenerative unit comprising:
- a regenerative fuel cell for converting water from the fuel cell into fuel and oxidising agent,
- a first inlet fluidly connected with the water collecting container,
- a first outlet fluidly connected with the fuel container, and
- a second outlet fluidly connected with the oxidising agent container.

Further, the vehicle as described above may further comprise a motor, and the power supply device may be an auxiliary power supply device or a secondary power supply to the vehicle.

The regenerative unit may be powered by surplus power from the motor.

Moreover, the control unit may activate the regenerative unit in order to regenerate the fuel and oxidising agent when the motor is running.

In addition, the fuel cell may have an internal pressure which is at least 1.05 bar, preferably at least 3 bar, and more preferably at least 5 bar, for increasing a boiling temperature of the water produced in the fuel cell.

Moreover, the device housing may have an internal pressure of at least 1.05 bar, preferably at least 1.5 bar, more preferably at least 3 bar, and even more preferably at least 5 bar.

### Brief description of the drawings

The invention and its many advantages will be described in more detail below with reference to the accompanying schematic drawings, which for the purpose of illustration show some non-limiting embodiments and in which
Fig. 1 shows a partial cross-sectional view of a power supply device for supplying power to parts of a vehicle,
Fig. 2 shows the vehicle being a car,
Fig. 3 shows the vehicle being a remote operated vehicle,
Fig. 4 shows the vehicle being a train/tram,
Fig. 5 shows a partial cross-sectional view of another power supply device arranged on a vehicle frame,
Fig. 6 shows a partial cross-sectional view of another power supply device comprising water absorbing material,
Fig. 7 shows a partial cross-sectional view of another power supply device arranged on a vehicle frame, and
Fig. 8 shows a partial cross-sectional view of another power supply device having a regenerative unit.

All the figures are highly schematic and not necessarily to scale, and they show only those parts which are necessary in order to elucidate the invention, other parts being omitted or merely suggested.

### Detailed description of the invention

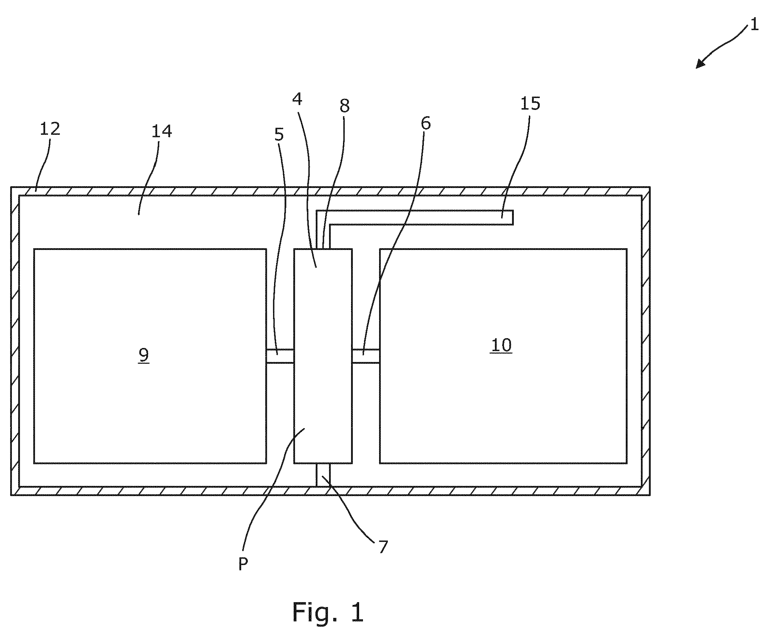

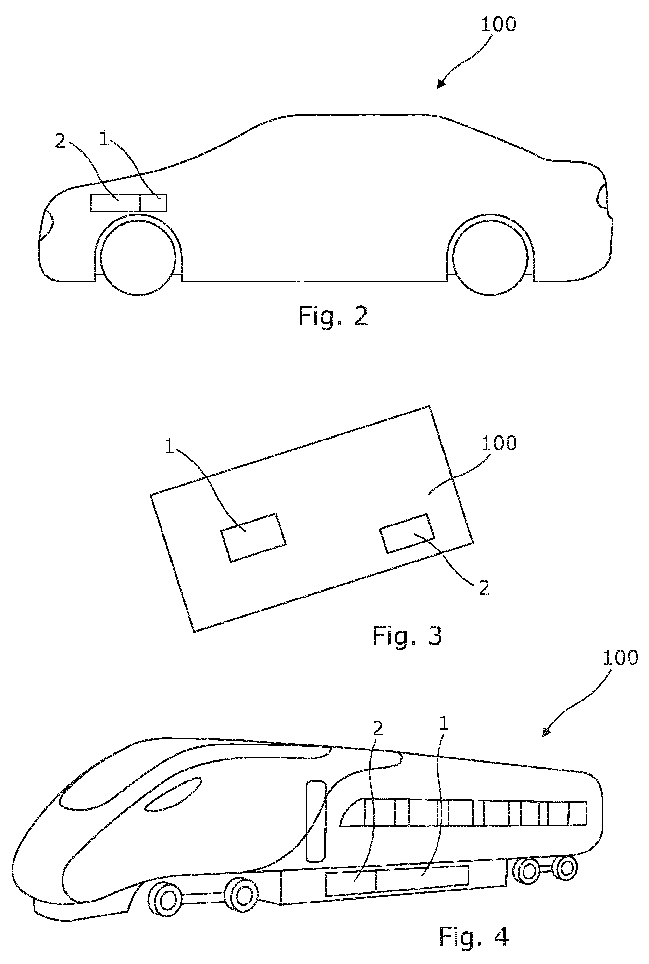

Fig. 1 shows a power supply device 1 for supplying power to a power consuming device 2 of a vehicle 100 as shown in Figs. 2, 3 and 4. The power supply device 1 is configured to operate the vehicle or part thereof and comprises a fuel cell 4 producing electricity, heat and water. The power supply device 1 has a fuel inlet 5, an oxidising inlet 6, an electric output 7 and a water outlet 8. Fuel is fed from a fuel container 9 fluidly connected to the fuel inlet, and oxidising agent is fed to the fuel cell from an oxidising agent container 10 fluidly connected to the oxidising inlet. The water is collected in a water collecting container 14 fluidly connected to the water outlet by means of a capillarity member 15 so that the water is led out of the fuel cell. When driving on a bumpy road or turning, e.g. in a hairpin turn/bend, the vehicle is not always in an upright position, and thus the gravity force cannot, in such a situation, be used to ensure that the water leaves the fuel cell. But by having a capillarity member 15, the water will always be led out of the fuel cell into the water collecting container which in Fig. 1 is a housing which houses the fuel cell, the oxidising agent container and the fuel container.

The power consuming device 2 in Fig. 2 is a motor for propelling the car forwards/backwards. The motor may be an electric motor. The vehicle may also be primarily driven by an internal combustion engine, and power consuming device 2 is thus another energy consuming device, such as an air-conditioning system of the car. In Fig. 3, the vehicle is a Remote Operated Vehicle (ROV), and the power consuming device 2 is the thruster or another energy consuming device of the ROV. In Fig. 3, the vehicle is a train in which the power consuming device 2 is the motor for driving or propelling the train forwards. The power consuming device 2 or the train may also be an auxiliary power consuming device 2.

Furthermore, the power supply device 1 can also be used as a secondary power supply allowing e.g. drivers stuck in car queue for a long period of time to turn off the primary motor, while the heat/air-conditioning system may keep running.

During heating of the motor, the water may reach its boiling temperature and the fuel cell has an internal pressure P which is at least 1.1 bar for increasing a boiling temperature of the water produced in the fuel cell in order to prevent the water from being transformed into its gas phase. Thus, under special circumstances, an internal pressure of at least 1.5 bar, preferably at least 2 bar, is required to ensure that the water does not reach its boiling temperature.

Thus, in order to withstand an external pressure of at least 50 bar, the device housing is provided with a significant wall thickness and is made of a material having a high yield strength. The device housing 12 may be made of aluminium in order to efficiently transport heat generated in the housing away from the housing.

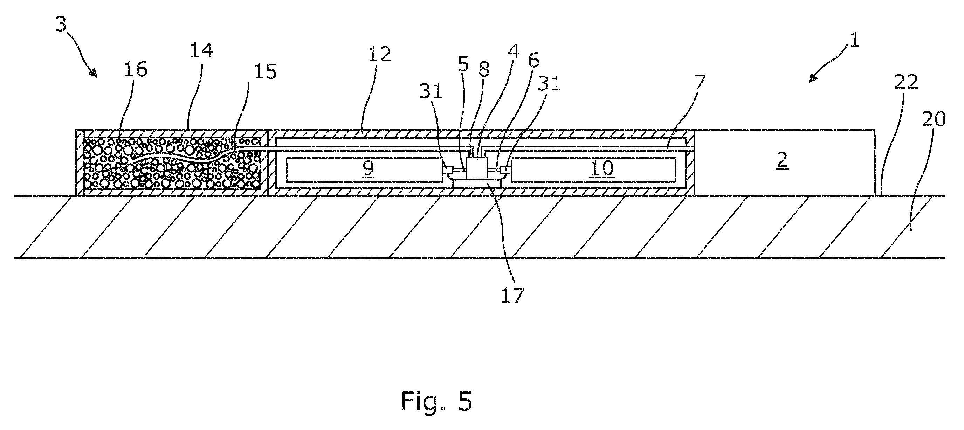

In Fig. 5, the power supply device 1 is arranged on an exterior face 22 of a vehicle frame 20 of a vehicle in order to power a power consuming device 2 which is electrically connected to the electric output 7. The power supply device 1 comprises a water collecting container 14, and the water outlet is fluidly connected to the water collecting container 14. The water outlet is fluidly connected to the water collecting container by means of the capillarity member 15, such as a wick. The capillarity member 15 thus sucks the water from the fuel cell into the water collecting container 14 by means of its capillary effect, and the ability of the water to be led away from the fuel cell does not rely on the gravity force, which is the case for known fuel cells. Thus by providing the power supply device 1 with the capillarity member 15, it is ensured that the water is always led from the fuel cell, so the process in the fuel cell is not deteriorated. The capillarity member may comprise a plurality of thin tubes, porous material, or similar materials and/or geometrical shapes for creating a capillarity effect. Thus, the capillarity member may comprise a bundle of thin tubes having inherent capillary effect and may be surrounded by an outer tube protecting the capillarity member 15 from the high internal pressure, so that the capillary function is not deteriorated.

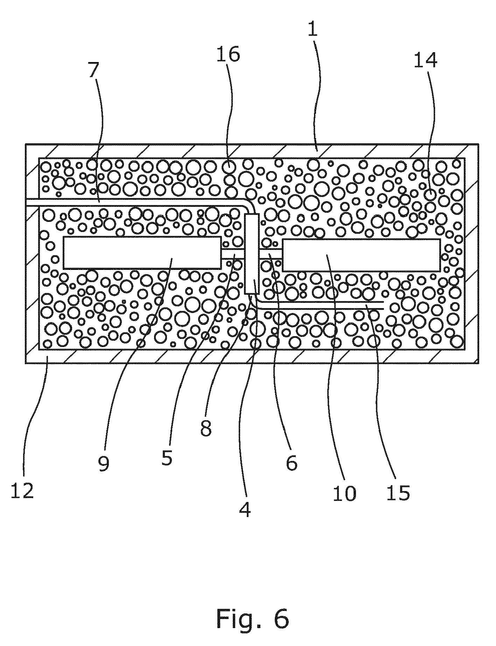

The water collecting container of Fig. 5 comprises a water absorbing material 16 to absorb the water from the capillarity member 15 and thus assist the capillarity member in extracting the water from the fuel cell. The water absorbing material comprises Silicon dioxide or similar materials. In Fig. 5, the water collecting container 14 is arranged adjacent to the device housing but may also be arranged in the device housing 12 as shown in Fig. 6, where the water collecting container 14 is the device housing 12, and the water absorbing material 16 is arranged in the device housing 12 surrounding both the containers and the fuel cell 4.

The power supply device 1 may further comprise a control unit 17 for controlling the supply of fuel and/or oxidising agent to the fuel cell 4 via electric lines, e.g. the control unit controls valves 31 arranged in the fuel inlet 5 and the oxidising inlet 6, as shown in Fig. 5. Once the valves are activated, the fuel cell is activated, and when the valves 31 are closed again, the fuel cell will stop producing electricity. The fuel cell can thus be turned on or off upon request without having to undergo a longer start-up procedure.

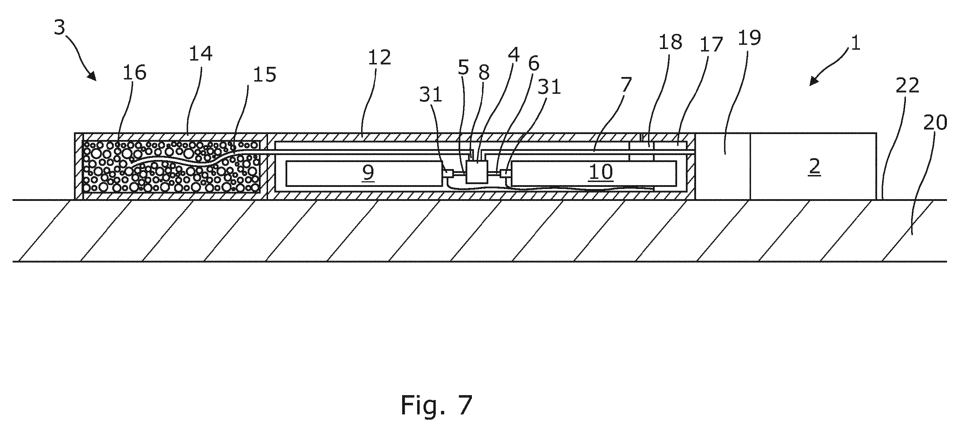

As shown in Fig. 7, the power supply device 1 further comprises a temperature sensor 18 for measuring a temperature exterior of the power supply device and/or interior of the power supply device 1. If the temperature increases to approximate the boiling point of the water, a pressure generating unit 19 is configured to increase the internal pressure, so that the boiling point of the water is equally increased to prohibit the water from boiling. The fuel container comprises a plurality of metal hydrates for binding the fuel and thereby ensuring a controlled fuel cell operation.

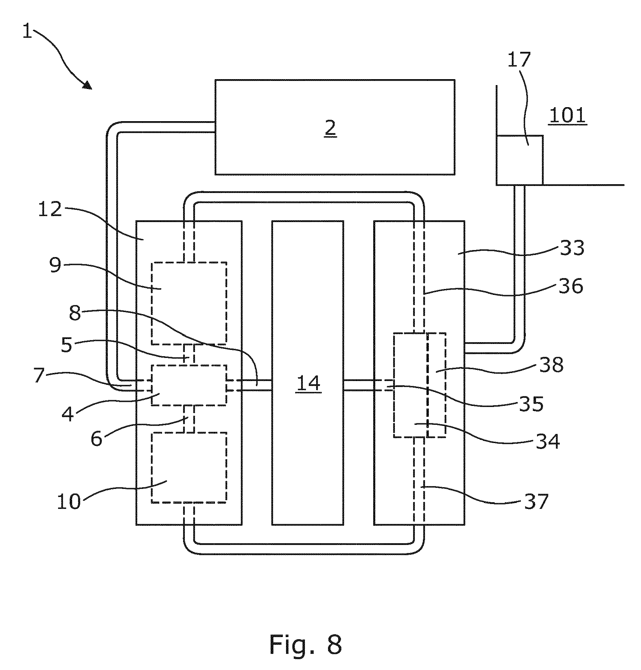

In Fig. 8, the power supply device 1 further comprises a regenerative unit 33 for converting water from the fuel cell into fuel and oxidising agent and thus recharging the fuel cell by supplying the fuel container with fuel and the oxidising agent container with oxidising agent. The regenerative unit 33 comprises a regenerative fuel cell 34 configured to convert water from the water collecting container into fuel and oxidising agent. The regenerative unit 33 thus has a first inlet 35 fluidly connected with the water collecting container, a first outlet 36 fluidly connected with the fuel container, and a second outlet 37 fluidly connected with the oxidising agent container. The regenerative unit 33 further comprises an energy harvesting unit 38 for harvesting energy from the motor 101 of the vehicle, which generates a surplus of energy which is then used to "charge" the fuel cell by energising the energy harvesting unit 38 and thus the regenerative fuel cell 34 to convert water into fuel and oxidising agent.

Thus, the power supply device may be a secondary power supply to the vehicle, the primary power supply being an internal combustion engine or an electric motor. The power supply device 1 is thus used as a back-up, e.g. when a driver is stuck in a car queue on the motorway and wishes to turn off the primary motor. In such a situation, the power supply device 1 ensures that other power consuming functions, such as the air-conditioning system, can still be running without risking that the car cannot start once the car queue is over. When the motor is running again, the surplus of energy generated in the motor is then used to activate the regenerative unit 33 in order to recharge the fuel cell by converting the water to fuel and oxidising agent, and then the power supply device 1 will be ready again.

The fuel may be hydrogen and the oxidising agent may be oxygen which in the fuel cell 4 undergo the following chemical reaction:

Anode Reaction: 2H₂ + 2O₂- → 2H₂O + 4e-

Cathode Reaction: O₂ + 4e- → 2O₂-

Overall Cell Reaction: 2H₂ + O₂ → 2H₂O

In the regenerative fuel cell 34, the water is converted into hydrogen and oxygen by the chemical reaction:

At cathode: H₂O + 2e- → H₂ + O₂-

At anode: O₂- → 1/2O₂ + 2e-

Overall: H₂O → 1/2O₂ + H₂

Although the invention has been described in the above in connection with preferred embodiments of the invention, it will be evident for a person skilled in the art that several modifications are conceivable without departing from the invention as defined by the following claims.

## Claims

1. A vehicle (100) for performing a self-propelling operation, comprising:
- a power consuming device (2) configured to operate the vehicle or part thereof, and
- a power supply device (1) for supplying power to the power consuming device (2) comprising:
- a fuel cell (4) producing electricity and water and having a fuel inlet (5), an oxidising inlet (6), an electric output (7) and a water outlet (8),
- a fuel container (9) fluidly connected to the fuel inlet,
- an oxidising agent container (10) fluidly connected to the oxidising inlet, and
- a water collecting container (14) fluidly connected to the water outlet, wherein the power supply device further comprises a capillarity member (15) fluidly connecting the water collecting container to the water outlet.

2. A vehicle according to claim 1, wherein the water collecting container comprises a water absorbing material (16).

3. A vehicle according to claim 1 or 2, wherein the water absorbing material comprises Silicon dioxide or similar materials.

4. A vehicle according to any of the preceding claims, wherein the capillarity member comprises a wick.

5. A vehicle according to any of the preceding claims, wherein the power supply device has a device housing (12) comprising the fuel cell, the fuel container and the oxidising agent container.

6. A vehicle according to claim 5, wherein the water collecting container is arranged in the device housing.

7. A vehicle according to any of the preceding claims, wherein the vehicle is a remote operated vehicle (ROV), a car, a truck, a bus, or a railed vehicle, such as a train or a tram.

8. A vehicle according to any of the preceding claims, wherein the fuel cell has an internal pressure (P) which is at least 1.05 bar for increasing a boiling temperature of the water produced in the fuel cell.

9. A vehicle according to any of the preceding claims, wherein the device housing has an internal pressure of at least 1.05 bar.

10. A vehicle according to any of the preceding claims, further comprising a control unit (17) for controlling the supply of fuel and/or oxidising agent to the fuel cell.

11. A vehicle according to any of the preceding claims, further comprising a regenerative unit (33) comprising:
- a regenerative fuel cell (34) for converting water from the fuel cell into fuel and oxidising agent,
- a first inlet (35) fluidly connected with the water collecting container,
- a first outlet (36) fluidly connected with the fuel container, and
- a second outlet (37) fluidly connected with the oxidising agent container.

12. A vehicle according to claim 11, further comprising a motor, and the power supply device is an auxiliary power supply device or a secondary power supply to the vehicle.

13. A vehicle according to claim 12, wherein the regenerative unit is powered by surplus power from the motor.

14. A vehicle according to any of claims 11-13, wherein the control unit activates the regenerative unit in order to regenerate the fuel and oxidising agent when the motor is running.
